# EUROPÄISCHE PATENTSCHRIFT

(11) **EP 3 020 115 B1**
(45) Veröffentlichungstag und Bekanntmachung des Hinweises auf die Patenterteilung: **02.10.2019**
(21) Anmeldenummer: 14730748.2
(22) Anmeldetag: 12.06.2014
(51) Int. Cl.: H02J 3/38, H02J 7/35

(54) **VERFAHREN ZUR LEISTUNGSREGELUNG EINES ENERGIESYSTEMS UND VORRICHTUNG ZUR LEISTUNGSREGELUNG DESSELBEN**
METHOD FOR CONTROL OF A POWER SYSTEM AND DEVICE THEREFOR
MÉTHODE DE CONTRÔLE D'UN SYSTÈME DE DISTRIBUTION DE PUISSANCE ET APPAREIL DE CÔNTROLE

(30) Priorität: 09.07.2013 DE 102013011384; 10.03.2014 DE 102014003054
(43) Veröffentlichungstag der Anmeldung: 18.05.2016
(73) Patentinhaber: SEW-EURODRIVE GmbH & Co. KG, 76646 Bruchsal (DE)
(72) Erfinder: BUDZEN, Harald, 76829 Landau (DE)
(86) Internationale Anmeldenummer: PCT/EP2014/001595
(87) Internationale Veröffentlichungsnummer: WO 2015/003771

(56) Entgegenhaltungen:
- EP-A2- 2 469 238
- WO-A1-2013/080835
- DE-A1-102011 111 192
- DE-U1-202012 004 269
- US-A1- 2010 262 312
- US-A1- 2012 229 077

## Beschreibung

Die Erfindung betrifft ein Verfahren zur Leistungsregelung eines Systems und eine Vorrichtung zur Leistungsregelung eines Systems.

Es ist allgemein bekannt, dass mittels photovoltaischen Anlagen Leistung ins Wechselstromversorgungsnetz einspeisbar ist. Jedoch müssen Verbraucher aus dem Wechselstromversorgungsnetz versorgt werden, wenn keine Sonneneinstrahlung vorhanden ist.

Aus der EP 2 469 238 A2 ist eine Photovoltaikanlage als nächstliegender Stand der Technik bekannt. In der dortigen **Figur 4** ist ein Wechselrichter ebenso mit einer Batterie verbunden wie auch ein Laderegler.

Aus der DE 20 2012 004269 U1 ist eine Steuereinheit zum kombinierten Betrieb von Photovoltaikanlagen oder anderen Energiequellen mit Ladestationen von Elektrofahrzeugen bekannt.

Aus der US 2012/229077 A1 ist ein elektrisches Versorgungssystem mit Solaranlage bekannt.

Aus der DE 10 2011 111 192 A1 ist eine zeitversetzte Batteriezuschaltung bei Notfallanforderung bekannt.

Aus der US 2010/262311 A1 ist ein elektrischer Energiespeicher für ein Haus bekannt.

Aus der WO 2013 / 080 835 A1 ist ein Laderegler bei einem photovoltaischen System bekannt.

Der Erfindung liegt daher die Aufgabe zugrunde, die Leistungsregelung in der Photovoltaik zu optimieren.

Erfindungsgemäß wird die Aufgabe bei dem Verfahren zur Leistungsregelung eines Systems nach den in Anspruch 1 und bei der Vorrichtung zur Leistungsregelung eines Systems nach den in Anspruch 4 angegebenen Merkmalen gelöst.

Wichtige Merkmale der Erfindung bei dem Verfahren zur Leistungsregelung eines Systems sind, dass das System eine elektrische Energiequelle, elektrische Verbraucher, einen Energiespeicher, einen Wechselrichter und einen Laderegler aufweist,
wobei das System über einen zwischengeschalteten Leistungssensor mit dem Wechselstromversorgungsnetz verbunden ist, wobei mittels des Leistungssensors der Leistungsbezug des Systems aus dem Wechselstromversorgungsnetz bestimmbar ist oder eine entsprechende Größe, wie Wirkleistungsbezug aus dem Wechselstromversorgungsnetz, bestimmbar ist,
wobei das Sensorsignal einem Regler zugeführt wird, der den Leistungsbezug aus dem Wechselstromversorgungsnetz auf Null hin regelt, indem er den Wechselrichter und den Laderegler entsprechend ansteuert.

Von Vorteil ist dabei, dass ein Energiespeicher die schwankende photovoltaisch erzeugte Leistung zur Pufferung der Energieströme einsetzbar ist. Somit ist ein Energiespeicher beladbar und nicht das Wechselstromversorgungsnetz zur Speisung verwendet.

Auf diese Weise ist ein besonders effektives Smart Grid schaffbar und die Anschlussleitungsquerschnitte zum Wechselstromversorgungsnetz hin sind reduzierbar. Hierdurch ist Kupfer einsparbar.

Bei einer vorteilhaften Ausgestaltung ist die Energiequelle eine Photovoltaik-Anlage oder eine andere regenerative Energiequelle, wie Windenergie. Von Vorteil ist dabei, dass die Energiequelle volatil ist, also zeitabschnittsweise hohe Leistung und zeitabschnittsweise niedrige oder keine Leistung erzeugt. Somit ist eine Pufferung mittels des Energiespeichers ausführbar, so dass trotz der Volatilität der Energiequelle ein geringer Energiebezug aus dem Wechselstromversorgungsnetz notwendig ist.

Wechselrichter und Laderegler werden alternativ aktiviert. Von Vorteil ist dabei, dass mittels des Wechselrichters Energie aus dem Energiespeicher in Form einer Wechselspannung für die Verbraucher bereitstellbar ist. Hierbei ist der Wechselrichter derart ausführbar, dass er an seinem wechselstromseitigen Anschluss eine einphasig oder auch dreiphasige Wechselspannung zur Verfügung stellt. Der alternativ aktivierbare Laderegler steuert das Aufladen des Energiespeichers, wobei er aus dem photovoltaisch erzeugten Wechselstrom des Systems versorgbar ist. Die Laderegelung erfolgt entweder nach einem CV-Verfahren oder nach einem CC-Verfahren.

Wenn die photovoltaisch erzeugte elektrische Leistung die Leistung der Verbraucher übersteigt, steuert der Regler den Laderegler derart an, dass überschüssige Leistung zum Energiespeicher hin geführt wird und nur darüber hinaus überschüssige Leistung ins Wechselstromversorgungsnetz eingespeist wird,
wobei zuvor der Wechselrichter vom Regler in einen Ruhezustand versetzt, deaktiviert und/oder abgeschaltet wird. Von Vorteil ist dabei, dass zwar eine Einspeisung ins Wechselstromversorgungsnetz ausführbar ist. Jedoch wird zuerst der Energiespeicher beladen und nur wenn die photovoltaisch erzeugte Leistung die Ladeleistung übersteigt, wird Leistung ins Wechselstromversorgungsnetz eingespeist.

Wenn die photovoltaisch erzeugte elektrische Leistung die Leistung der Verbraucher unterschreitet, steuert der Regler den Wechselrichter derart an, dass vom Energiespeicher den Verbrauchern Leistung zugeführt wird,
wobei zuvor der Laderegler vom Regler in einen Ruhezustand versetzt, deaktiviert und/oder abgeschaltet wird,
wobei nur darüber hinaus notwendige elektrische Leistung aus dem Wechselstromversorgungsnetz bezogen wird. Von Vorteil ist dabei, dass der Energiebezug gering und somit die Energiekosten ebenfalls gering haltbar sind.

Der Regler weist einen Filter auf und/oder im Ansteuerpfad vom Regler zum Laderegler und/oder Wechselrichter ist ein Einschaltverzögerungsmittel angeordnet. Von Vorteil ist dabei, dass eine optimierte Ausführung realisierbar ist und die Komponenten des Systems schützbar sind.

Bei einer vorteilhaften Ausgestaltung wird eine Hysterese beim Ansteuern des Ladereglers und/oder Wechselrichters berücksichtigt. Von Vorteil ist dabei, dass eine Aufschwingen des Systems verhinderbar ist.

Bei einer vorteilhaften Ausgestaltung führt eine Signalelektronik des Wechselrichters, insbesondere eine im Gehäuse des Wechselrichters angeordnete Signalelektronik, eine Laderegelung für den Energiespeicher aus. Von Vorteil ist dabei, dass keine weitere Signalelektronik notwendig ist.

Ein Sensor zur Erfassung einer Temperatur des Energiespeichers ist vorgesehen, wobei das Sensorsignal einer Signalelektronik des Wechselrichters zugeführt wird,
so dass eine temperaturabhängige Laderegelung für den Energiespeicher ausführbar ist. Von Vorteil ist dabei, dass das Lademanagement von der Signalelektronik des Umrichters ausführbar ist. Hierzu weist die Signalelektronik vorzugsweise einen Speicher auf, in welchem Daten, Parameter und Programme speicherbar sind und mittels der Signalelektronik, insbesondere deren Mikrocontroller, ausführbar. Somit übernimmt der Mikrocontroller zur Erzeugung der pulsweitenmodulierten Ansteuersignale des Wechselrichters auch das Lademanagement.

Wichtige Merkmale bei der Vorrichtung zur Leistungsregelung eines Systems, zur Durchführung des vorgenannten Verfahrens sind, dass das System eine elektrische Energiequelle, einen elektrischen Verbraucher, einen Energiespeicher, einen Wechselrichter und einen Laderegler aufweist,
wobei ein Leistungssensor zwischen dem System und dem Wechselstromversorgungsnetz zwischengeschaltet ist, wobei mittels des Leistungssensors der Leistungsbezug des Systems aus dem Wechselstromversorgungsnetz bestimmbar ist oder eine entsprechende Größe, wie Wirkleistungsbezug aus dem Wechselstromversorgungsnetz, bestimmbar ist,
wobei das Sensorsignal, insbesondere also das Signal des Leistungssensors, einem Regler, insbesondere einem in der Signalelektronik angeordneten Gehäuse, zugeführt wird, der den Leistungsbezug aus dem Wechselstromversorgungsnetz auf Null hin regelt, indem er über einen Ansteuerpfad den Wechselrichter und/oder den Laderegler entsprechend ansteuert.

Von Vorteil ist dabei, dass der Bezug aus dem Wechselstromversorgungsnetz möglichst gering und somit auch die Energiekosten möglichst gering haltbar sind.

Der Ansteuerpfad weist vom Regler aus einen Umschalter auf, so dass entweder der Wechselrichter oder der Laderegler aktiviert sind,
wobei eine Hysterese beim Ansteuern vorgesehen ist.

Im Ansteuerpfad vom Regler zum Laderegler und/oder Wechselrichter ist ein Einschaltverzögerungsmittel angeordnet. Von Vorteil ist dabei, dass entweder ein Beladen des Energiespeichers oder ein Versorgen des Systems ausführbar ist.

Eine Signalelektronik des Wechselrichters ist im Gehäuse des Wechselrichters angeordnet. Von Vorteil ist dabei, dass keine weitere Signalelektronik notwendig ist sondern ein industrieüblicher spannungsführbarer Frequenzumrichter verwendbar ist. Dabei weist der Frequenzumrichter Mittel zur Erfassung des Ausgangsstroms auf.

Ein Sensor zur Erfassung einer Temperatur des Energiespeichers vorgesehen, wobei das Sensorsignal einer Signalelektronik des Wechselrichters zugeführt wird,
so dass eine temperaturabhängige Laderegelung für den Energiespeicher ausführbar ist. Von Vorteil ist dabei, dass das Lademanagement, unter Berücksichtigung der Temperatur des Energiespeichers, von der Signalelektronik zusätzlich zur Regelung und Erzeugung der Ansteuersignale für den Wechselrichter ausführbar ist. Außerdem ist in der Signalelektronik auch ein Mittel zur Strombegrenzung integriert vorgesehen.

Weitere Vorteile ergeben sich aus den Unteransprüchen.

Die Erfindung wird nun anhand von Abbildungen näher erläutert:

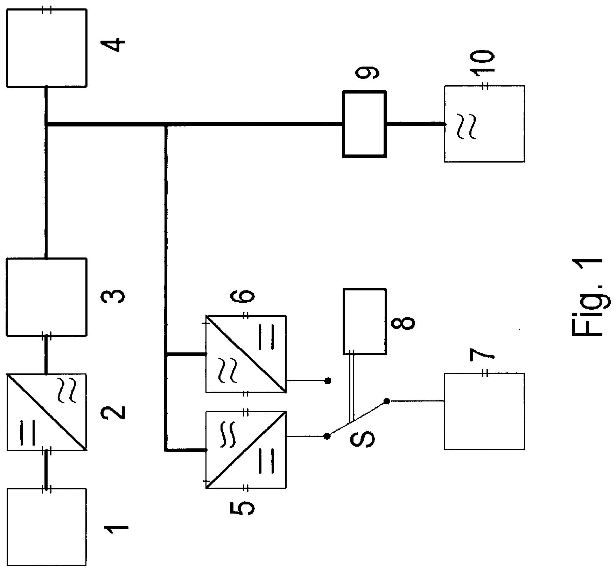

In der Figur 1 ist ein schematischer Aufbau eines erfindungsgemäßen Systems gezeigt.

Hierbei wird mittels einer Photovoltaik-Anlage 1, insbesondere umfassend Solarmodule, eine Gleichspannung erzeugt, die einem Wechselrichter 2 zugeführt wird, der eine Wechselspannung erzeugt. Am Ausgang des Wechselrichters 2 ist ein Einspeisezähler 3 angeordnet, welcher die zur Verfügung gestellte elektrische Energie erfasst.

Vom Ausgang des Wechselrichters sind Verbraucher 4, insbesondere Waschmaschine, Kühlschrank, Elektroauto, versorgbar. Der Wechselrichter 2 synchronisiert die von ihm erzeugte Spannung auf die Spannung des Wechselstromversorgungsnetzes 10 auf.

Zwischen Wechselstromversorgungsnetz 10 und Ausgang des Wechselrichters 2 und/oder Einspeisezähler 3 ist ein Vierquadrantenenergiezähler 9, insbesondere Wirkleistungssensor, angeordnet. Mittels dieses Vierquadrantenenergiezählers 9 wird somit erfassbar, ob ein Energiebezug vom Wechselstromversorgungsnetz 10 oder eine Energieabgabe ans Wechselstromversorgungsnetz 10 erfolgt. Es wird also die Richtung des Energiestroms vom System ins Wechselstromversorgungsnetz 10 oder vom Wechselstromversorgungsnetz 10 ins System erfasst.

Abhängig von der detektierten Wirkleistung und/oder Richtung des Energiestroms wird ein Schalter S angesteuert, welcher entweder einen Laderegler 5, insbesondere umfassend Gleichrichter, oder einen Wechselrichter 6 aktiviert.

Hierbei führt der Laderegler 5 vom Wechselrichter 2 eingespeisten Strom dem Energiespeicher 7 zu dessen Beladung zu, wenn dieser aktiviert ist.

Bei Aktivierung des Wechselrichters 6 wird der Energiespeicher 7 entladen, indem aus ihm der gleichstromseitige Anschluss des Wechselrichters 6 gespeist wird. An seinem Wechselspannungsausgang stellt der Wechselrichter 6 dem System, also insbesondere den Verbrauchern eine Wechselspannung zur Verfügung. Somit sind die Verbraucher aus dem Energiespeicher 7 über den Wechselrichter 6 versorgbar und der Bezug aus dem Wechselstromversorgungsnetz 10 ist möglichst gering.

Mittels des Vierquadrantenenergiezählers 9, insbesondere Wirkleistungssensors, wird also die aus dem Netz 10 vom System aufgenommene Leistung, insbesondere Wirkleistung, detektiert, die als Istwert einem Regler zugeführt wird, der diesen Istwert auf den Sollwert Null hin regelt, indem er die Ansteuerung 8 des Schalters S entsprechend ansteuert. Auf diese Weise wird aus dem Wechselstromversorgungsnetz 10 möglichst wenig Energie bezogen und bei hoher Sonneneinstrahlung die überschüssige Energie vorrangig in den Energiespeicher 7 geführt. Erste wenn der Energiespeicher 7 beladen ist, wird bei weiter überschüssig vorhandener photovoltaisch erzeugter Leistung, diese ins Wechselstromversorgungsnetz 10 eingespeist.

Bei nicht oder nur gering vorhandener photovoltaisch erzeugter Leistung wird aus dem Energiespeicher 7 Leistung an die Verbraucher des Systems geleitet und möglichst wenig vom Wechselstromversorgungsnetz 10. Nur wenn der Energiespeicher 7 leer ist oder der Wechselrichter 6 zu wenig Leistung liefern kann, wird Leistung vom Wechselstromversorgungsnetz 10 an die Verbraucher des Systems geführt.

Bei einem weiteren erfindungsgemäßen Ausführungsbeispiel weist der Laderegler einen pulsweitenmoduliert angesteuerten Wechselrichter auf, dessen gleichstromseitiger Anschluss von einem Gleichrichter des Ladereglers gespeist wird. Der wechselspannungsseitige Ausgang des Wechselrichters wird von einem weiteren Gleichrichter gleichgerichtet und somit Ladespannung dem Energiespeicher zur Verfügung gestellt. Somit ist der Ladestrom und die Ladespannung mittels des Ladereglers mit dessen entsprechenden Sensoren erfassbar und der Enegiespeicher 7 mit maximaler Ladeleistung aufgeladen.

### Bezugszeichenliste

- 1: Photovoltaik-Anlage, insbesondere Solarmodule
- 2: Wechselrichter
- 3: Einspeisezähler
- 4: Verbraucher, insbesondere Waschmaschine, Kühlschrank, Elektroauto
- 5: Laderegler, insbesondere umfassend Gleichrichter
- 6: Wechselrichter
- 7: Energiespeicher
- 8: Ansteuerung
- 9: Vierquadrantenenergiezähler, insbesondere Wirkleistungssensor
- 10: Wechselstromversorgungsnetz
- S: Schalter

## Patentansprüche

1. Verfahren zur Leistungsregelung eines Systems,
wobei das System eine elektrische Energiequelle, elektrische Verbraucher (4), einen Energiespeicher (7), einen Wechselrichter (2, 6) und einen Laderegler (5) aufweist,
wobei das System über einen zwischengeschalteten Leistungssensor mit einem Wechselstromversorgungsnetz (10) verbunden ist, wobei mittels des Leistungssensors der Leistungsbezug des Systems aus dem Wechselstromversorgungsnetz (10) bestimmbar ist oder eine entsprechende Größe, wie Wirkleistungsbezug aus dem Wechselstromversorgungsnetz (10), bestimmbar ist,
wobei das Sensorsignal einem Regler zugeführt wird, der den Leistungsbezug aus dem Wechselstromversorgungsnetz (10) auf Null hin regelt, indem er den Wechselrichter (2, 6) und den Laderegler (5) entsprechend ansteuert,
wobei der Laderegler einen pulsweitenmoduliert angesteuerten Wechselrichter aufweist, dessen gleichstromseitiger Anschluss von einem Gleichrichter des Ladereglers gespeist wird,
wobei der wechselspannungsseitige Anschluss des Wechselrichters von einem weiteren Gleichrichter gleichgerichtet wird und somit Ladespannung dem Energiespeicher zur Verfügung gestellt wird,
wobei der Regler einen Filter aufweist,
wobei ein Sensor zur Erfassung einer Temperatur des Energiespeichers (7) vorgesehen ist, wobei das Sensorsignal einer Signalelektronik des Wechselrichters (2, 6) zugeführt wird,
so dass eine temperaturabhängige Laderegelung für den Energiespeicher (7) ausführbar ist,
wobei eine im Gehäuse des Wechselrichters (2, 6) angeordnete Signalelektronik die Laderegelung für den Energiespeicher (7) ausführt.
der Wechselrichter (2, 6) und der Laderegler (5) alternativ aktiviert werden,
- wenn die photovoltaisch erzeugte elektrische Leistung die Leistung der Verbraucher (4) übersteigt, der Regler den Laderegler (5) derart ansteuert, dass überschüssige Leistung zum Energiespeicher (7) hin geführt wird und nur darüber hinaus überschüssige Leistung ins Wechselstromversorgungsnetz (10) eingespeist wird, wobei der Wechselrichter (2, 6) vom Regler in einen Ruhezustand versetzt, deaktiviert und/oder abgeschaltet wird,
- wenn die photovoltaisch erzeugte elektrische Leistung die Leistung der Verbraucher (4) unterschreitet, der Regler den Wechselrichter (2, 6) derart ansteuert, dass vom Enegiespeicher den Verbrauchern (4) Leistung zugeführt wird, wobei der Laderegler (5) vom Regler in einen Ruhezustand versetzt, deaktiviert und/oder abgeschaltet wird, wobei nur darüber hinaus notwendige elektrische Leistung aus dem Wechselstromversorgungsnetz (10) bezogen wird,
**dadurch gekennzeichnet, dass**
im Ansteuerpfad vom Regler zum Laderegler (5) und/oder Wechselrichter (2, 6) ein Einschaltverzögerungsmittel angeordnet ist.

2. Verfahren nach Anspruch 1,
**dadurch gekennzeichnet, dass**
die Energiequelle eine Photovoltaik-Anlage (1) oder eine andere regenerative Energiequelle, wie Windenergie, ist.

3. Verfahren nach mindestens einem der vorangegangenen Ansprüche,
**dadurch gekennzeichnet, dass**
eine Hysterese beim Ansteuern des Ladereglers (5) und/oder Wechselrichters (2, 6) berücksichtigt wird.

4. Vorrichtung zur Leistungsregelung eines Systems zur Durchführung eines Verfahrens nach mindestens einem der vorangegangenen Ansprüche,
**dadurch gekennzeichnet, dass**
das System eine elektrische Energiequelle, einen elektrischen Verbraucher (4), einen Energiespeicher (7), einen Wechselrichter (2, 6) und einen Laderegler (5) aufweist,
wobei ein Leistungssensor zwischen dem System und dem Wechselstromversorgungsnetz (10) zwischengeschaltet ist, wobei mittels des Leistungssensors der Leistungsbezug des Systems aus dem Wechselstromversorgungsnetz (10) bestimmbar ist oder eine entsprechende Größe, wie Wirkleistungsbezug aus dem Wechselstromversorgungsnetz (10), bestimmbar ist,
wobei das Signal des Leistungssensors einem Regler, welcher in einem Gehäuse der Signalelektronik ist, zugeführt wird, der den Leistungsbezug aus dem Wechselstromversorgungsnetz (10) auf Null hin regelt, indem er über einen Ansteuerpfad den Wechselrichter (2, 6) und/oder den Laderegler (5) entsprechend ansteuert,
wobei der Wechselrichter (2, 6) und der Laderegler (5) alternativ aktiviert werden, wobei eine als Laderegler (5) fungierende Signalelektronik des Wechselrichters (2, 6) im Gehäuse des Wechselrichters (2, 6) angeordnet ist,
wobei der Ansteuerpfad vom Regler aus einen Umschalter aufweist, so dass entweder der Wechselrichter (2, 6) oder der Laderegler (5) aktiviert sind,
wobei der Laderegler einen pulsweitenmoduliert angesteuerten Wechselrichter aufweist, dessen gleichstromseitiger Anschluss von einem Gleichrichter des Ladereglers gespeist wird,
wobei der wechselspannungsseitige Ausgang des Wechselrichters von einem weiteren Gleichrichter gleichgerichtet und somit Ladespannung dem Energiespeicher zur Verfügung gestellt wird,
wobei ein Sensor zur Erfassung einer Temperatur des Energiespeichers (7) vorgesehen ist, wobei das Sensorsignal einer Signalelektronik des Wechselrichters (2, 6) zugeführt wird,
der geeignet ausgeführt ist, eine temperaturabhängige Laderegelung für den Energiespeicher (7) auszuführen,
**dadurch gekennzeichnet, dass**
eine Hysterese beim Ansteuern vorgesehen ist, wobei im Ansteuerpfad vom Regler zum Laderegler (5) und/oder Wechselrichter (2, 6) ein Einschaltverzögerungsmittel angeordnet ist.

## Claims

1. Method for controlling the power of a system,
the system comprising an electrical energy source, electrical loads (4), an energy storage unit (7), an inverter (2, 6) and a charge regulator (5),
the system being connected to an AC power supply grid (10) by means of a power sensor connected therebetween, it being possible, by means of the power sensor, to determine the amount of power imported from the AC power supply grid (10) by the system, or it being possible to determine a corresponding variable, such as active power imported from the AC power supply grid (10),
the sensor signal being supplied to a controller, which controls the amount of power imported from the AC power supply grid (10) towards zero by actuating the inverter (2, 6) and the charge regulator (5) accordingly,
the charge regulator comprising an inverter that is actuated in a pulse-width-modulated manner and the DC-side terminal of which is fed from a rectifier of the charge regulator,
the AC-voltage-side terminal of the rectifier being rectified by a further rectifier and charging voltage thus being provided to the energy storage unit,
the controller comprising a filter,
a sensor being provided for detecting a temperature of the energy storage unit (7), the sensor signal being supplied to a signal electronics of the inverter (2, 6),
such that temperature-based charge regulation can be carried out for the energy storage unit (7),
the charge regulation for the energy storage unit (7) being carried out by a signal electronics arranged in the housing of the inverter (2, 6),
the inverter (2, 6) and the charge regulator (5) being activated in alternation,
- when the photovoltaically generated electric power exceeds the power of the loads (4), the controller actuates the charge regulator (5) such that excess power is conducted to the energy storage unit (7) and only excess power beyond this is fed into the AC power supply grid (10), the inverter (2, 6) being placed in a standby state, deactivated and/or switched off by the controller,
- when the photovoltaically generated electric power falls below the power of the loads (4), the controller actuates the inverter (2, 6) such that power is supplied to the loads (4) from the energy storage unit, the charge regulator (5) being placed in a standby state, deactivated and/or switched off by the controller, only electric power required beyond this being imported from the AC power supply grid (10),
**characterised in that**
a switch-on delay means is arranged in the actuation path from the controller to the charge regulator (5) and/or the inverter (2, 6).

2. Method according to claim 1,
**characterised in that**
the energy source is a photovoltaic installation (1) or another renewable energy source, such as wind energy.

3. Method according to at least one of the preceding claims,
**characterised in that**
a hysteresis is taken into account in the actuation of the charge regulator (5) and/or the inverter (2, 6).

4. Device for controlling the power of a system, for carrying out a method according to at least one of the preceding claims,
**characterised in that**
the system comprises an electrical energy source, an electrical load (4), an energy storage unit (7), an inverter (2, 6) and a charge regulator (5),
a power sensor being connected between the system and the AC power supply grid (10), it being possible, by means of the power sensor, to determine the amount of power imported by the system from the AC power supply grid (10), or it being possible to determine a corresponding variable, such as active power imported from the AC power supply grid (10), the signal of the power sensor being supplied to a controller in a housing of the signal electronics, which controller controls the power imported from the AC power supply grid (10) towards zero by actuating the inverter (2, 6) and/or the charge regulator (5) accordingly by means of an actuation path,
the inverter (2, 6) and the charge regulator (5) being activated in alternation,
a signal electronics, which acts as a charge regulator (5), of the inverter (2, 6) being arranged in the housing of the inverter (2, 6),
the actuation path from the controller comprising a changeover switch, such that either the inverter (2, 6) or the charge regulator (5) is activated,
the charge regulator comprising an inverter that is actuated in a pulse-width-modulated manner and the DC-side terminal of which is fed from a rectifier of the charge regulator,
the AC-voltage-side output of the inverter being rectified by a further rectifier and charging voltage thus being provided to the energy storage unit,
a sensor being provided for detecting a temperature of the energy storage unit (7), the sensor signal being supplied to a signal electronics of the inverter (2, 6),
which is configured to be capable of carrying out temperature-based charge regulation for the energy storage unit (7),
**characterised in that**
a hysteresis is provided during the actuation, a switch-on delay means being arranged in the actuation path from the controller to the charge regulator (5) and/or the inverter (2, 6).

## Revendications

1. Procédé de régulation de puissance d'un système,
le système présentant une source d'énergie électrique, des consommateurs électriques (4), un accumulateur d'énergie (7), un onduleur (2, 6) et un régulateur de charge (5), le système étant raccordé à un réseau d'alimentation en courant alternatif (10) par l'intermédiaire d'un capteur de puissance intercalé, lequel capteur de puissance permet de déterminer le prélèvement de puissance du système sur le réseau d'alimentation en courant alternatif (10) ou de déterminer une grandeur correspondante, telle que le prélèvement de puissance active sur le réseau d'alimentation en courant alternatif (10),
le signal de capteur étant amené à un régulateur qui régule le prélèvement de puissance sur le réseau d'alimentation en courant alternatif (10) à zéro en commandant l'onduleur (2, 6) et le régulateur de charge (5) en conséquence,
le régulateur de charge présentant un onduleur commandé en modulation de largeur d'impulsion dont la connexion côté courant continu est alimentée par un redresseur du régulateur de charge,
la connexion côté tension alternative de l'onduleur étant redressée par un autre redresseur et une tension de charge étant ainsi mise à la disposition de l'accumulateur d'énergie,
le régulateur présentant un filtre,
un capteur étant prévu pour détecter une température de l'accumulateur d'énergie (7), le signal de capteur étant amené à une électronique de signalisation de l'onduleur (2, 6), de sorte qu'une régulation de charge dépendante de la température peut être réalisée pour l'accumulateur d'énergie (7),
une électronique de signalisation disposée dans le boîtier de l'onduleur (2, 6) réalisant la régulation de charge pour l'accumulateur d'énergie (7),
l'onduleur (2, 6) et le régulateur de charge (5) étant activés alternativement,
- lorsque la puissance électrique produite par photovoltaïque est supérieure à la puissance des consommateurs (4), le régulateur commande le régulateur de charge (5) de telle sorte que la puissance excédentaire soit fournie à l'accumulateur d'énergie (7) et que seule la puissance excédentaire supplémentaire soit injectée dans le réseau d'alimentation en courant alternatif (10), l'onduleur (2, 6) étant mis dans un état de repos, désactivé et/ou coupé par le régulateur,
- lorsque la puissance électrique produite par photovoltaïque est inférieure à la puissance des consommateurs (4), le régulateur commande l'onduleur (2, 6) de telle sorte que de la puissance soit amenée aux consommateurs (4) à partir de l'accumulateur d'énergie, le régulateur de charge (5) étant mis dans un état de repos, désactivé et/ou coupé par le régulateur, seule la puissance électrique supplémentaire nécessaire étant prélevée sur le réseau d'alimentation en courant alternatif (10),
**caractérisé en ce**
**qu'**un moyen de retard à l'enclenchement est disposé dans le trajet de commande entre le régulateur et le régulateur de charge (5) et/ou l'onduleur (2, 6).

2. Procédé selon la revendication 1,
**caractérisé en ce**
**que** la source d'énergie est une installation photovoltaïque (1) ou une autre source d'énergie renouvelable, telle que d'énergie éolienne.

3. Procédé selon au moins l'une des revendications précédentes,
**caractérisé en ce**
**qu'**une hystérésis est prise en compte lors de la commande du régulateur de charge (5) et/ou de l'onduleur (2, 6).

4. Dispositif de régulation de puissance d'un système pour la mise en oeuvre d'un procédé selon au moins l'une des revendications précédentes,
**caractérisé en ce que**
le système présente une source d'énergie électrique, des consommateurs électriques (4), un accumulateur d'énergie (7), un onduleur (2, 6) et un régulateur de charge (5), un capteur de puissance étant intercalé entre le système et le réseau d'alimentation en courant alternatif (10), lequel capteur de puissance permet de déterminer le prélèvement de puissance du système sur le réseau d'alimentation en courant alternatif (10) ou de déterminer une grandeur correspondante, telle que le prélèvement de puissance active sur le réseau d'alimentation en courant alternatif (10),
le signal du capteur de puissance étant amené à un régulateur qui est disposé dans un boîtier de l'électronique de signalisation et qui régule le prélèvement de puissance sur le réseau d'alimentation en courant alternatif (10) à zéro en commandant, via un trajet de commande, l'onduleur (2, 6) et/ou le régulateur de charge (5) en conséquence, l'onduleur (2, 6) et le régulateur de charge (5) étant activés alternativement,
une électronique de signalisation de l'onduleur (2, 6) fonctionnant comme régulateur de charge (5) étant disposée dans le boîtier de l'onduleur (2, 6),
le trajet de commande à partir du régulateur présentant un commutateur, de sorte que soit l'onduleur (2, 6), soit le régulateur de charge (5) est activé,
le régulateur de charge présentant un onduleur commandé en modulation de largeur d'impulsion dont la connexion côté courant continu est alimentée par un redresseur du régulateur de charge,
la connexion côté tension alternative de l'onduleur étant redressée par un autre redresseur et une tension de charge étant ainsi mise à la disposition de l'accumulateur d'énergie,
un capteur étant prévu pour détecter une température de l'accumulateur d'énergie (7), le signal de capteur étant amené à une électronique de signalisation de l'onduleur (2, 6) qui est conçu pour réaliser une régulation de charge dépendante de la température pour l'accumulateur d'énergie (7),
**caractérisé en ce**
**qu'**une hystérésis est prévue lors de la commande, un moyen de retard à l'enclenchement étant disposé dans le trajet de commande entre le régulateur et le régulateur de charge (5) et/ou l'onduleur (2, 6).
